# EUROPÄISCHE PATENTANMELDUNG

(11) **EP 0 922 674 A1**
(43) Veröffentlichungstag der Anmeldung: **16.06.1999**
(21) Anmeldenummer: 98122729.1
(22) Anmeldetag: 28.11.1998
(51) Int. Cl.: C01C 3/02

(54) **Verfahren zur Herstellung von Blausäure**

(30) Priorität: 11.12.1997 DE 19754982
(71) Anmelder: DEGUSSA AKTIENGESELLSCHAFT, 60311 Frankfurt (DE)
(72) Erfinder: von Hippel, Lukas, Dr., 63755 Alzenau (DE); Gutsch, Andreas, Dr., 63695 Ranstadt (DE); Schaffer, Roland, 63589 Linsengericht (DE); Sauer, Manfred, Dr., 63517 Rodenbach (DE); Vanheertum, Rudolf, Dr., 63796 Kahl (DE)

(57) **Zusammenfassung**

Die Erfindung betrifft ein Verfahren zur Herstellung von Blausäure durch Gasphasenreaktion von Methan mit Ammoniak bei erhöhter Temperatur und einem Ammoniak/Methan-Verhältnis von 1,001 bis 1,1. Durch Leiten des Reaktionsgasgemisches durch eine Korona-Entladung setzt die Reaktion schon bei Temperaturen unterhalb von und 1000°C ohne die Einwirkung eines Katalysators ein. Hierdurch ergeben sich erhebliche Einsparungen bei den notwendigen Investitionskosten sowie bei den laufenden Energiekosten.

## Beschreibung

Die Erfindung betrifft ein Verfahren zur Herstellung von Blausäure durch Gasphasenreaktion von Methan mit Ammoniak bei erhöhter Temperatur und einem Ammoniak-Überschuß von mindestens 0,1 Mol-%.

Blausäure wird heutzutage großtechnisch nach dem Andrussow-Verfahren oder dem BMA-Verfahren hergestellt (siehe Ullmann's Encyclopedia of Industrial Chemistry, Volume A8, Weinheim 1987, Seiten 161 - 163). Beim Andrussow-Verfahren werden Methan, Ammoniak und Sauerstoff bei Temperaturen oberhalb von 1000°C an einem Katalysator zu Blausäure und Wasser umgesetzt. Bei dem Katalysator handelt es sich um ein Drahtgeflecht aus einer Platin/Rhodium- oder Platin/Iridium-Legierung.

Im Falle des BMA-Verfahrens werden Methan und Ammoniak bei Temperaturen oberhalb von 1300°C an einem platinhaltigen Katalysator umgesetzt (EP 0 407 809 B1). Dabei entsteht neben der Blausäure auch Wasserstoff. Das BMA-Verfahren wird überwiegend in einem sogenannten Rohrbündelreaktor durchgeführt. Die Reaktionsrohre bestehen im wesentlichen aus Aluminiumoxid und sind auf ihrer Innenfläche mit der platinhaltigen, katalytisch wirksamen Beschichtung versehen. Zur Aufrechterhaltung der Reaktionstemperatur sind die Rohre im Inneren einer Brennkammer aufgehängt und werden von den Brenngasen umströmt. Die Reaktionsrohre sind typischerweise etwa 2 m lang und weisen Innendurchmesser von etwa 16 bis 18 mm auf.

Zur Erzeugung der Blausäure wird eine Mischung von Ammoniak und Methan durch die Reaktionsrohre geleitet und sehr schnell auf etwa 1300°C bei Normaldruck aufgeheizt. Um die Bildung von störenden Rußablagerungen auf den Innenflächen zu vermeiden, wird das Molverhältnis Ammoniak zu Methan in einem Bereich von 1,001 bis 1,08 aufrecht erhalten.

Mit dem BMA-Verfahren werden Ausbeuten von Blausäure, bezogen auf das eingesetzte Methan, von etwa 90 % erreicht. Der BMA-Prozeß ist endotherm. Die zur Erzeugung eingesetzte Energie beträgt etwa 40 MJ pro Kilogramm erzeugter Blausäure. Durch Verwendung eines monolithischen Gegenstromreaktors gemäß der DE 195 24 158 kann der Energiebetrag pro Kilogramm Blausäure etwa auf die Hälfte vermindert werden.

Sowohl das Andrussow-Verfahren als auch das BMA-Verfahren erfordern hohe Investitions- und laufende Kosten. Wegen der hohen Reaktionstemperaturen werden für die Reaktoren entsprechend aufwendige technische Konstruktionen benötigt. Auch die platinhaltigen Katalysatoren bedeuten einen großen Investitionsaufwand und müssen nach etwa 10000 bis 15000 Betriebsstunden wegen zunehmender Desaktivierung ausgetauscht werden.

Andrussow-Verfahren und BMA-Verfahren sind nur für die großtechnische Produktion von Blausäure geeignet. Ein einziger Reaktor kann eine Leistung von 5000 bis 20000 Jato (Jahrestonnen) aufweisen. Die Reaktoren laufen ohne Unterbrechung über 1 bis 2 Jahre, bevor der Katalysator regeneriert oder ausgetauscht werden muß. Das Anfahren der Reaktoren ist langwierig und dauert gewöhnlich mehrere Stunden. Für mittlere Produktionsmengen bis zu 1000 Tonnen pro Jahr steht kein kostengünstiges Verfahren zur Verfügung.

Aufgabe der vorliegenden Erfindung ist es daher, ein Verfahren zur Herstellung von Blausäure anzugeben, welches bei wesentlich niedrigen Temperaturen arbeitet, ohne Katalysatoren auskommt und für die Herstellung von Blausäure in kleineren Mengen geeignet ist.

Diese Aufgabe wird durch ein Verfahren zur Herstellung von Blausäure durch Gasphasenreaktion von Methan mit Ammoniak bei erhöhter Temperatur und einem Ammoniak/Methan-Molverhältnis über 1 gelöst. Das Verfahren ist dadurch gekennzeichnet, daß das Reaktionsgasgemisch auf eine Temperatur zwischen 500 und 1000°C erwärmt und durch eine Korona-Entladung geführt wird. Bevorzugt wird ein Ammoniak/Methan-Molverhältnis zwischen 1,001 und 1,1 gewählt.

Eine Korona-Entladung bildet sich in Gasen mit Drücken von etwa Atmosphärendruck und höher an Orten hoher elektrischer Feldstärken aus. Eine solche Entladung kann zum Beispiel zwischen zwei metallischen Elektrodenplatten durch Anlegen einer elektrischen Spannung erzeugt werden. Die benötigten hohen elektrischen Feldstärken lassen sich auch schon mit konventionellen Hochspannungsquellen von 10 bis 20 kV Ausgangsspannung erzeugen, wenn auf die Elektrodenplatten metallische Spitzen, im folgenden auch als Entladungsspitzen bezeichnet, aufgesetzt werden. In der Umgebung der Spitzen beträgt die sich ausbildende Feldstärke ein Vielfaches der Feldstärke zwischen zwei Platten ohne Metallspitzen und reicht für die Aufrechterhaltung der Korona-Entladung aus. Bei der für die Koronaentladung benötigten Spannung kann es sich um Gleich- oder Wechselspannung mit Frequenzen bis zu 500 kHz handeln.

Die Gasphasenreaktion von Methan und Ammoniak zu Blausäure und Wasserstoff ist erst bei sehr hohen Temperaturen oberhalb von 1300°C möglich. Es wurde gefunden, daß durch die Einwirkung der Korona-Entladung diese Reaktion schon bei sehr viel niedrigeren Temperaturen von maximal 1000°C stattfindet. Günstig sind Temperaturen zwischen 500 und 1000°C.

Die unterstützende Wirkung der Korona-Entladung ist von der Art der elektrischen Beschaltung der Elektroden abhängig. Es können drei wesentliche Schaltungsarten unterschieden werden: bipolar, unipolar positiv und unipolar negativ.

Bei der bipolaren Beschaltung der Elektroden werden die Elektroden jeweils mit dem positiven und dem negativen Pol einer zur Erde symmetrischen Gleichspannungsquelle verbunden. Im Falle der unipolar positiven Beschaltung wird der negative und bei unipolar negativer Beschaltung wird der positive Pol der Spannungsquelle geerdet. Bei der unipolaren Beschaltung der Elektroden ist also immer eine der beiden Elektroden geerdet.

Die drei Beschaltungsarten können sinngemäß auch auf Wechselspannungsquellen übertragen werden. Bei unipolar negativer Beschaltung ist ebenfalls eine Elektrode geerdet, während das Potential der Gegenelektrode im Takt der Wechselspannung negative Werte gegenüber der geerdeten Elektrode annimmt. Analoges gilt für unipolar positive und für die bipolare Beschaltung.

Die besten Ergebnisse wurden mit unipolar negativer Beschaltung erzielt. Die sich dabei einstellende Korona-Entladung wird im Rahmen dieser Erfindung als negative Korona-Entladung bezeichnet. Der Raumbereich, in dem die Korona-Entladung stattfindet, wird von den beiden Elektroden aufgespannt. Beim Durchströmen dieses Raumbereiches werden die Methan- und Ammoniak-Moleküle durch Stöße mit den Elektronen der Entladung angeregt oder ionisiert. Dadurch wird die Umsetzung zu Blausäure bei wesentlich geringeren Temperaturen als bei konventionellen Herstellverfahren ermöglicht.

Die mit einer Korona-Entladung erzielbaren Stromdichten sind gering. Sie liegen im Bereich zwischen 0,1 µA/cm² und 0,1 mA/cm² Sie sind nur in begrenztem Maße durch die Elektrodenkonfiguration und die angelegte Spannung beeinflußbar. Wird versucht, den Stromfluß durch Erhöhen der angelegten Spannung zu vergrößern, so besteht die Gefahr, daß die Korona-Entladung in eine selbständige Bogenentladung übergeht. Ein zu geringer Entladungsstrom reicht dagegen für eine ausreichende Anregung der Reaktionspartner nicht aus. Es hat sich als vorteilhaft erwiesen, die Raumgeschwindigkeit des Reaktionsgasgemisches durch den von den Elektroden aufgespannten Raumbereich und den Entladungsstrom so aufeinander abzustimmen, daß pro Mol Methan etwa 0,02 bis 100 Coulomb an elektrischer Ladung durch das Reaktionsgasgemisch fließen.

Die Abtrennung der gebildeten Blausäure aus dem Produktgasgemisch kann auf bekannte Art und Weise vorgenommen werden.

Ein besonderer Vorteil des erfindungsgemäßen Verfahrens ist die Tatsache, daß die Bildung der Blausäure augenblicklich durch Ausschalten der Korona-Entladung beendet werden kann. Ebenso setzt die Bildung der Blausäure nach Einschalten der elektrischen Entladung sofort ein. Ein mehrere Stunden dauerndes Hochfahren des Prozesses wie bei den bekannten großtechnischen Verfahren ist nicht erforderlich.

Zur weiteren Erläuterung der Erfindung dienen die folgenden Ausführungsbeispiele und Figuren. Es zeigen:
- Figur 1:: Elektrodenanordnung zur Durchführung des Verfahrens
- Figur 2:: Aufbau einer Elektrode zur Erzeugung der Korona-Entladung
a) Seitenansicht
b) Aufsicht
- Figur 3:: Spitze zur Erzeugung der Korona-Entladung; vergrößerte Detailansicht 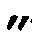 A" von Figur 1
- Figur 4:: elektrische Beschaltung der Elektroden
a) bipolare Beschaltung
b) unipolar positive Beschaltung
c) unipolar negative Beschaltung

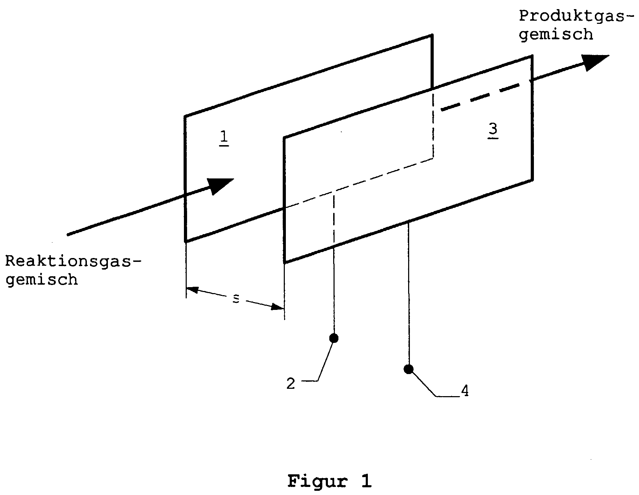

Figur 1 zeigt eine perspektivische Darstellung der Elektrodenanordnung zur Herstellung von Blausäure unter Einwirkung einer elektrischen Korona-Entladung. Die beiden Plattenelektroden 1 und 3 sind parallel mit einem gegenseitigen Abstand s zueinander angeordnet. Über die elektrischen Anschlüsse 2 und 4 werden die Elektroden mit einer Spannungsquelle verbunden. Die beiden Elektroden werden bevorzugt in einen Rohrreaktor mit quadratischem oder rechteckigem Querschnitt eingebaut. Die Gaszuführungsleitungen zum Rohrreaktor sind mit Heizvorrichtungen ausgerüstet, um das Reaktionsgasgemisch auf die erforderliche Reaktionstemperatur aufzuheizen. Der Rohrreaktor selbst kann ebenfalls beheizt sein. Nach Durchlaufen der Entladungsstrecke zwischen den Elektroden und Verlassen des Reaktors wird das die gebildete Blausäure enthaltende Produktgasgemisch den üblichen Trennverfahren zugeleitet, um die gebildet Blausäure abzutrennen.

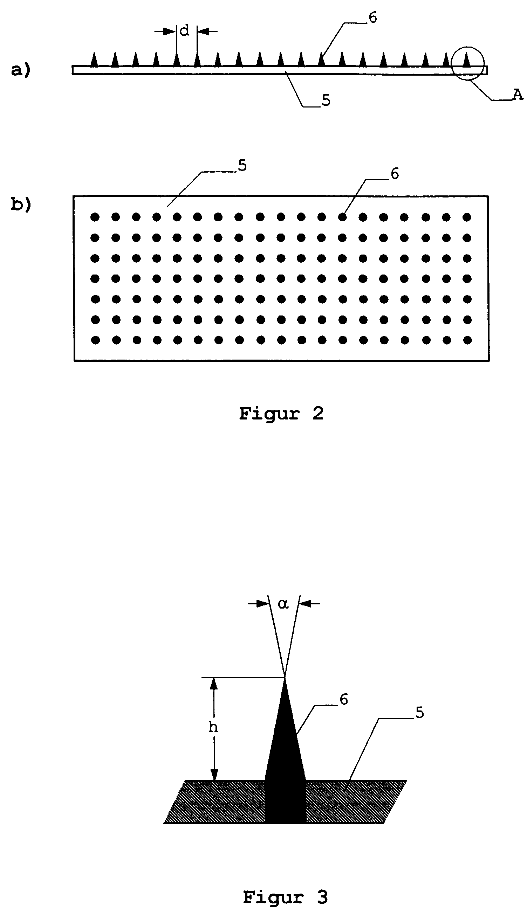

Zur Erzeugung der Korona-Entladung zwischen den metallischen Elektroden sind die sich gegenüberliegenden Flächen der Elektroden wie in Figur 2 gezeigt mit metallischen Entladungsspitzen versehen. Figur 2 a) zeigt eine Seitenansicht einer Elektrodenplatte 5 mit den aufgesetzten Spitzen 6. Die Entladungsspitzen sind bevorzugt in einem regelmäßigen Raster mit einem Rasterabstand d angeordnet. Figur 2 b) zeigt eine Aufsicht auf die mit den Spitzen versehene Fläche der Elektrode. Figur 3 gibt eine vergrößerte Ansicht des Details A von Figur 2 a) wieder. Die Entladungsspitzen sind in die Elektrodenplatte eingesetzt und weisen eine Höhe h über der Elektrodenplatte auf. Der Spitzenwinkel α der Elektroden kann zwischen 10 und 30° betragen. Als geeignetes Material für Elektrodenplatte und Spitzen haben sich rostfreie Stähle wie zum Beispiel V4A erwiesen.

Figuren 2 und 3 geben nur eine mögliche Ausführungsform der Elektroden zur Erzeugung der Korona-Entladung wieder. Das erfindungsgemäße Verfahren ist keinesfalls nur auf diese Ausführungsform beschränkt. Die Rasteranordnung der Spitzen ist weitgehend frei wählbar - ebenso die konkrete Ausführungsform der Spitzen. Im Falle der unipolaren Beschaltung kann bei der geerdeten Elektrodenplatte auf Entladungsspitzen verzichtet werden. Statt der metallischen Elektrodenplatte kann auch eine dieelektrische Halteplatte für die Entladungsspitzen verwendet werden.

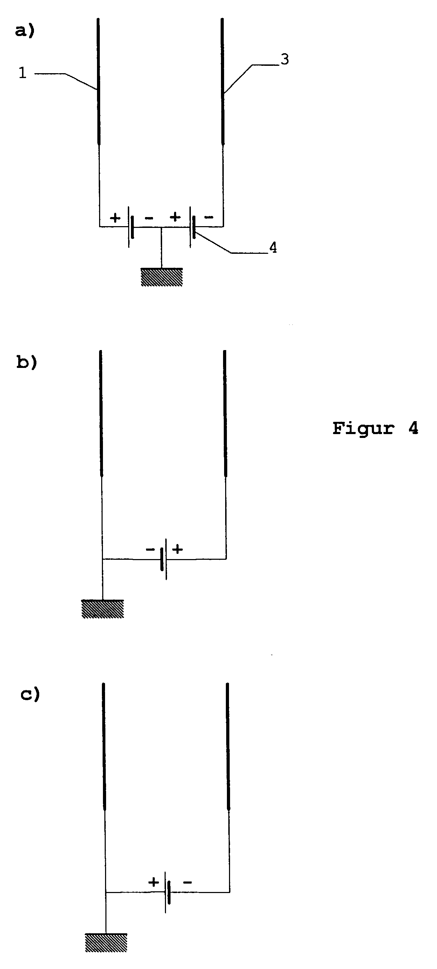

Figur 4 zeigt verschiedene elektrische Beschaltungen der Elektrodenplatten 1 und 3. Der Einfachheit halber sind in dieser Darstellung die Entladungsspitzen fortgelassen. In Figur 4 a) sind die Elektroden bipolar mit einer zur Erde symmetrischen Spannungsquelle 4 beschaltet. Figur 4 b) zeigt eine unipolar positive Beschaltung und Figur 4 c) eine unipolar negative Beschaltung. Bei den beiden letzteren Schaltungsarten ist jeweils eine der Elektroden geerdet. Die zweite Elektrode ist mit dem Plus- beziehungsweise mit dem Minuspol der Spannungsquelle verbunden. Wie schon zuvor besprochen, kann die Gleichspannungsquelle durch eine Wechselspannungsquelle ausgetauscht werden.

Die folgenden Beispiele wurden in einem Reaktor aus Quarzglas mit quadratischem Querschnitt von 5 cm Kantenlänge durchgeführt. In diesem Reaktor waren gemäß Figur 1 zwei Elektroden mit einem gegenseitigen Abstand von 3,5 cm aufgestellt. Die Elektroden hatten eine Fläche von 4 x 10 cm² und waren mit Spitzen von 5 mm Höhe und einem Rasterabstand von 7 mm versehen. Der Spitzenwinkel betrug 15°.

Die Zuführungsleitung zum Reaktor bestand ebenfalls aus Quarzglas und wies einen Durchmesser von 5 cm auf. Die Volumenströme von Methan und Ammoniak wurde mit Schwebekörper-Durchflußmessern geregelt und in der Zuführungsleitung miteinander vermischt. Die Zuführungsleitung wurde vor dem Reaktor durch einen Röhrenofen geleitet, der die Reaktionsgasmischung auf die jeweils gewünschte Reaktionstemperatur vorheizte.

Hinter dem Reaktor wurde das Produktgasgemisch zur Auftrennung und Analyse der einzelnen Komponenten durch Waschflaschen geleitet. In einer ersten Waschflasche wurde nicht umgesetzter Ammoniak mit Schwefelsäure ausgewaschen, in einer zweiten Waschflasche wurde die gebildete Blausäure mit Natronlauge abgetrennt. Der verbleibende Wasserstoff und nicht umgesetztes Methan wurden verbrannt.

Durch Auswaschen der Blausäure mit Natronlauge bildete sich Natriumcyanid, das durch argentometrische Titration bestimmt wurde. Die Menge des umgesetzten Ammoniaks wurde durch Stickstoffbestimmung nach Kjeldahl ermittelt. In allen Beispielen wurden Massenströme von 550 mmol/h Ammoniak und 500 mmol/h Methan eingesetzt.

### Beispiel 1:

Das Reaktionsgasgemisch wurde vor Eintritt in den Reaktor auf 500°C aufgeheizt. An die Elektroden wurde keine Spannung angelegt.

Es wurde weder die Bildung von Natriumcyanid festgestellt noch konnte ein Umsatz von Ammoniak ermittelt werden.

### Beispiel 2:

Beispiel 1 wurde mit einer Vorheizung des Reaktionsgasgemisches auf 1000°C wiederholt.

Es wurde eine Ausbeute von 0,4 % Blausäure, bezogen auf Methan, gefunden.

### Beispiel 3:

Das Reaktionsgasgemisch wurde nur auf 250°C vorgeheizt und durch den Reaktor geleitet. Die Elektroden waren unipolar positiv beschaltet. Die angelegte Spannung betrug +2,4 kV. Es wurde ein Stromfluß von 9,2 mA gemessen.

Es wurde eine Ausbeute von 4,8 % Blausäure, bezogen auf Methan, gefunden. Der Umsatz an Ammoniak betrug etwa 6 %.

### Beispiel 4:

Beispiel 3 wurde mit einer Vorheizung auf 400°C und einer Spannung von +8 kV wiederholt. Es wurde ein Stromfluß von 6,5 mA gemessen.

Die Ausbeute an Blausäure betrug 5,9 %, bezogen auf Methan. Der Umsatz an Ammoniak betrug 8 %.

### Beispiel 5:

Das Reaktionsgasgemisch wurde auf 400°C vorgeheizt. Die Elektroden wurden bipolar beschaltet. Die angelegten Spannungen betrugen +4 kV und -4 kV. Es wurde ein Stromfluß von 6,5 mA gemessen.

Es wurden eine Blausäure-Ausbeute von 7,3 %, bezogen auf Methan, und ein Ammoniak-Umsatz von 10 % ermittelt.

### Beispiel 6:

Das Reaktionsgasgemisch wurde auf 500°C vorgeheizt. Die Elektroden wurden unipolar negativ beschaltet. Die angelegte Spannung betrug -11 kV. Es wurde ein Stromfluß von 0,9 mA gemessen.

Es wurden eine Blausäure-Ausbeute von 17,3 %, bezogen auf Methan, und ein Ammoniak-Umsatz von 20 % ermittelt.

### Beispiel 7:

Beispiel 6 wurde mit einer Vorheizung des Reaktionsgasgemisches auf 600°C und einer Spannung von -13 kV wiederholt. Es wurde ein Stromfluß von 0,7 mA gemessen.

Die Blausäure-Ausbeute betrug 36,8 %, bezogen auf Methan, bei einem Ammoniak-Umsatz von 41 %.

### Beispiel 8:

Die in den vorangegangenen Beispielen verwendeten Elektroden wurden gegen neue ausgetauscht, die eine höhere Dichte von Entladungsspitzen aufwiesen. Der Rasterabstand der Entladungsspitzen betrug nur 1,5 mm.

Das Reaktionsgasgemisch wurde wie in Beispiel 6 auf 600°C vorgeheizt. Bei einer Spannung von -12 kV wurde ein Stromfluß von 0,8 mA gemessen.

Die Blausäure-Ausbeute betrug 56,2 %, bezogen auf Methan, bei einem Ammoniak-Umsatz von 70 %.

### Beispiel 9:

Beispiel 8 wurde wiederholt, jedoch wurde der Elektrodenabstand von 3,5 cm auf 2 cm vermindert. Bei einer Spannung von -7 kV wurde ein Strom von 1 mA gemessen.

Die Blausäure-Ausbeute betrug 65,3 %, bezogen auf Methan, bei einem Ammoniak-Umsatz von 70 %.

In Tabelle 1 sind die erzielten Ergebnisse zusammengefaßt. Hierin bedeuten T die Temperatur des Reaktionsgasgemisches bei Eintritt in den Reaktor und U und I die an die Elektroden angelegte Spannung beziehungsweise den gemessenen Strom. A ist die Ausbeute an Blausäure, bezogen auf Methan. U ist der gemessene Ammoniak-Umsatz. Tabelle 1 enthält darüber hinaus Angaben über die pro Mol Methan geflossene elektrische Ladung.

**Tabelle 1**

| Ergebnisse der Beispiele | | | | | | | |
|---|---|---|---|---|---|---|---|
| Beispiel | T [°C] | Schaltung | U [kV] | I [mA] | A [%] | U [%] | Ladung pro Mol Methan [C/mol] |
| 1 | 500 | - | - | - | - | - | - |
| 2 | 1000 | - | - | - | 0,4 | - | - |
| 3 | 250 | unipolar positiv | +2,4 | 9,2 | 4,8 | 6 | 66,2 |
| 4 | 400 | unipolar positiv | +8 | 6,5 | 5,9 | 8 | 46,8 |
| 5 | 400 | bipolar | +4/-4 | 6,5 | 7,3 | 10 | 46,8 |
| 6 | 500 | unipolar negativ | -11 | 0,9 | 17,3 | 20 | 6,5 |
| 7 | 600 | unipolar negativ | -13 | 0,7 | 36,8 | 41 | 5 |
| 8 | 600 | unipolar negativ | -12 | 0,8 | 56,2 | 70 | 5,8 |
| 9 | 600 | unipolar negativ | -7 | 1 | 65,3 | 70 | 7,2 |

| | | | | | | | |
|---|---|---|---|---|---|---|---|
| A: Ausbeute an Blausäure, bezogen auf Methan | | | | | | | |
| U: Umsatz von Ammoniak | | | | | | | |

## Patentansprüche

1. Verfahren zur Herstellung von Blausäure durch Gasphasenreaktion von Methan mit Ammoniak bei erhöhter Temperatur und einem Ammoniak/Methan-Verhältnis größer als 1,
**dadurch gekennzeichnet,**
daß das Reaktionsgasgemisch auf eine Temperatur zwischen 500 und 1000°C erwärmt und durch eine Korona-Entladung geführt wird

2. Verfahren nach Anspruch 1,
**dadurch gekennzeichnet,**
daß Raumgeschwindigkeit und Entladungsstrom so aufeinander abgestimmt werden, daß pro Mol Methan 0,02 bis 100 Coulomb an elektrischer Ladung durch das Reaktionsgasgemisch fließen.

3. Verfahren nach Anspruch 2,
**dadurch gekennzeichnet,**
daß es sich bei der Entladung um eine Gleichspannungsentladung handelt.

4. Verfahren nach Anspruch 2,
**dadurch gekennzeichnet,**
daß es sich bei der Entladung um eine Wechselspannungsentladung handelt.

5. Verfahren nach einem der Ansprüche 3 oder 4,
**dadurch gekennzeichnet,**
daß die Entladung bipolar, unipolar negativ oder unipolar positiv geführt wird.
